# FASCICULE DE BREVET EUROPEEN

(11) **EP 2 732 734 B1**
(45) Date de publication et mention de la délivrance du brevet: **09.09.2015**
(21) Numéro de dépôt: 13192101.7
(22) Date de dépôt: 08.11.2013
(51) Int. Cl.: A47J 27/08, A47J 27/09

(54) **Appareil de cuisson d'aliments sous pression à commande de déverrouillage améliorée**
Druckkochgerät mit verbesserter Entriegelungssteuerung
Appliance for cooking food under pressure with improved unlocking control

(30) Priorité: 16.11.2012 FR 1260936
(43) Date de publication de la demande: 21.05.2014
(73) Titulaire: SEB S.A., 69130 Ecully (FR)
(72) Inventeur: Rhetat, Eric, 21000 Dijon (FR)
(74) Mandataire: Martin, Didier Roland Valéry

(56) Documents cités:
- EP-A1- 1 547 497
- WO-A1-2012/045979
- US-A- 5 678 721

## Description

La présente invention se rapporte au domaine technique général des appareils de cuisson d'aliments sous pression, et en particulier aux appareils domestiques du genre autocuiseurs, comprenant une cuve et un couvercle destiné à être verrouillé sur la cuve pour former une enceinte de cuisson sensiblement étanche pendant la cuisson, de tels appareils étant destinés à assurer la cuisson sous pression de vapeur des aliments contenus dans l'enceinte de cuisson.

La présente invention concerne plus particulièrement un appareil de cuisson d'aliments sous pression comprenant :
- une cuve et un couvercle susceptible de fermer la cuve de manière étanche pour former une enceinte de cuisson,
- un organe de commande du verrouillage/déverrouillage du couvercle sur la cuve, ledit organe étant mobile entre au moins une position de déverrouillage et une position de repos, et étant en liaison cinématique avec un mécanisme de verrouillage monté mobile sur le couvercle pour le déplacer et assurer le verrouillage/déverrouillage du couvercle,
- un moyen de sécurité à l'ouverture sensible à la pression existant dans l'enceinte de cuisson et susceptible d'occuper une position active dans laquelle il empêche le déverrouillage du couvercle lorsqu'il règne dans l'enceinte de cuisson une pression sensiblement supérieure à la pression atmosphérique,
- ledit organe de commande étant pourvu d'au moins un moyen de débrayage autorisant l'organe de commande à venir occuper sa position de déverrouillage sans permettre le déverrouillage.

Les appareils de cuisson d'aliments sous pression sont déjà connus et comprennent une cuve métallique sur laquelle est rapportée de manière étanche, par exemple par l'intermédiaire d'un joint, un couvercle, de manière à constituer une enceinte de cuisson sensiblement étanche.

Le couvercle est destiné à être verrouillé sur la cuve par l'intermédiaire d'un mécanisme de verrouillage susceptible d'occuper une position de verrouillage du couvercle sur la cuve, et une position de déverrouillage dans laquelle le couvercle peut être ôté de la cuve.

Il existe différents types de mécanismes de verrouillage bien connus dans l'art antérieur, tels des mécanismes mettant en oeuvre une pluralité de mâchoires montées mobiles radialement sur le couvercle et qui viennent enserrer le bord de cuve en position de verrouillage.

On connaît également des mécanismes de verrouillage dit à *« segments »* formés par exemple par une ou plusieurs barres ou barrettes montées mobiles radialement sur le couvercle et venant s'engager dans des orifices ménagés dans la cuve pour assurer le verrouillage.

Il existe enfin d'autres mécanismes de verrouillage mettant par exemple en oeuvre un étrier mobile en rotation, sans que cette liste soit limitative.

La commande du déplacement du mécanisme de verrouillage entre sa position de verrouillage et sa position de déverrouillage est assurée par un organe de commande monté sur le couvercle et destiné à être actionné par l'utilisateur pour qu'il puisse commander le mécanisme de verrouillage. Grâce à cet organe de commande, l'utilisateur peut amener les pièces de verrouillage, du genre mâchoires ou segments par exemple, dans leur position de verrouillage et / ou de déverrouillage, par le biais d'un mécanisme de transmission interposé entre l'organe de commande et les pièces de verrouillage / déverrouillage.

Pour assurer une sécurité parfaite et totale des utilisateurs lorsqu'ils souhaitent déverrouiller et ouvrir les appareils de cuisson d'aliments sous pression, ces derniers sont équipés de moyens de sécurité à l'ouverture.

De manière connue, les moyens de sécurité à l'ouverture utilisés mettent par exemple en oeuvre une tige ou un doigt de sécurité sensible à la pression de fonctionnement régnant à l'intérieur de l'enceinte de cuisson.

La tige ou le doigt de sécurité est par exemple monté(e) à coulissement vertical au sein d'un orifice traversant du couvercle selon une course prédéterminée, de telle sorte que la tige ou le doigt peut occuper une position basse de rappel et une position haute qu'il (elle) atteint sous l'effet d'un niveau de pression prédéterminé de sécurité.

Le doigt ou la tige de sécurité est conçu(e) et intégré(e) dans un mécanisme interagissant avec l'organe de commande, de telle manière que la tige ou le doigt de sécurité empêche le déverrouillage du couvercle lorsqu'il (elle) est en position active (position haute), c'est à dire lorsqu'il existe un niveau de pression sensiblement supérieur à la pression atmosphérique dans l'enceinte de cuisson.

Selon un mécanisme de sécurité à l'ouverture connu (WO-2012/045979), le doigt de sécurité assure le débrayage du déplacement de l'organe de commande lorsqu'il reste un niveau de pression significatif dans l'enceinte de cuisson correspondant à un positionnement du doigt de sécurité dans sa position haute.

Dans ce dispositif connu, l'organe de commande est pourvu d'un moyen de débrayage mettant en oeuvre un ressort dont la compression permet de rendre inactive l'action de déverrouillage de l'organe de commande, même si ce dernier est actionné par l'utilisateur lequel en exerçant un effort supérieur à celui habituellement nécessaire à l'ouverture du produit alors même que le doigt de sécurité est monté, peut déplacer l'organe de commande dans sa position de déverrouillage.

Ce dispositif connu fournit une bonne sécurité à l'ouverture, puisque même en positionnant l'organe de commande dans sa position de déverrouillage, l'utilisateur ne peut parvenir à déverrouiller l'appareil et ôter le couvercle, dès lors qu'il subsiste encore une pression sensiblement supérieure à la pression atmosphérique à l'intérieur de l'enceinte de cuisson.

Ceci étant, il s'avère que ce mécanisme connu a pour inconvénient de solliciter constamment les pièces du mécanisme de commande, dans la mesure où il met en oeuvre un ressort de compression qui sollicite les pièces de la liaison cinématique avec des niveaux d'efforts non négligeables, dès l'instant où l'organe de commande est déplacé et qu'il subsiste une pression à l'intérieur de l'enceinte de cuisson.

Il s'avère en pratique que de telles sollicitations de l'organe de commande sont particulièrement fréquentes en utilisation normale de l'appareil, ce qui sollicite inutilement les pièces mises en oeuvre, d'autant que pour fonctionner convenablement, la raideur du ressort de compression utilisé est importante, de telle sorte que les sollicitations subies sont corrélativement non négligeables.

Il s'avère enfin que la mise en oeuvre d'un ressort de compression a pour conséquence d'exercer un effort de retour permanent sur l'organe de commande lorsque ce dernier est en position de déverrouillage, ce qui a tendance à générer un effet de surprise chez l'utilisateur et peut conduire à des manipulations hasardeuses ou risquées de l'appareil, alors même que ce dernier est toujours verrouillé.

Les objets assignés à l'invention visent par conséquent à porter remède aux différents inconvénients énumérés précédemment et à proposer un nouvel appareil de cuisson d'aliments sous pression qui tout en présentant un système d'ouverture particulièrement sûr à utiliser est d'une construction particulièrement fiable dans le temps, et d'utilisation particulièrement simple.

Un autre objet de l'invention vise à proposer un nouvel appareil de cuisson d'aliments sous pression de conception particulièrement robuste.

Un autre objet de l'invention vise à proposer un nouvel appareil de cuisson d'aliments sous pression qui nécessite un effort réduit d'ouverture tout en étant particulièrement sûr d'utilisation.

Les objets assignés à l'invention sont atteints à l'aide d'un appareil de cuisson d'aliments sous pression comprenant :
- une cuve et un couvercle susceptible de fermer la cuve de manière étanche pour former une enceinte de cuisson,
- un organe de commande du verrouillage/déverrouillage du couvercle sur la cuve, ledit organe étant mobile entre au moins une position de déverrouillage et une position de repos, et étant en liaison cinématique avec un mécanisme de verrouillage monté mobile sur le couvercle pour le déplacer et assurer le verrouillage/déverrouillage du couvercle,
- un moyen de sécurité à l'ouverture sensible à la pression existant dans l'enceinte de cuisson et susceptible d'occuper une position active dans laquelle il empêche le déverrouillage du couvercle lorsqu'il règne dans l'enceinte de cuisson une pression sensiblement supérieure à la pression atmosphérique,
- ledit organe de commande étant pourvu d'au moins un moyen de débrayage autorisant l'organe de commande à venir occuper sa position de déverrouillage sans permettre le déverrouillage, ledit appareil étant **caractérisé en ce que** ledit au moins un moyen de débrayage est agencé pour désaccoupler la liaison cinématique entre l'organe de commande et le mécanisme de verrouillage lorsque l'organe de commande occupe sa position de déverrouillage et que le moyen de sécurité est dans sa position active de telle sorte que l'organe de commande est libre de se déplacer entre sa position de verrouillage et de repos.

D'autres particularités et avantages de l'invention apparaîtront et ressortiront plus en détails à la lecture de la description qui suit, en référence aux dessins annexés, donnés à titre purement illustratif et non limitatif, dans lesquels :
- Les figures 1 et 2 illustrent, selon des vues en perspective, un appareil de cuisson d'aliments conforme à l'invention en position de verrouillage (figure 1) et de déverrouillage (figure 2) du couvercle sur la cuve.
- Les figures 3 et 4 illustrent, selon des vues partielles latérales, les positions de l'organe de commande d'un appareil de cuisson d'aliments conforme à l'invention, respectivement en position de début de déverrouillage (figure 3) et en position de déverrouillage complet (figure 4).
- La figure 5 illustre, selon une vue latérale similaire à celle des figures 3 et 4, la position de l'organe de commande d'un appareil de cuisson d'aliments sous pression selon l'invention lorsque le moyen d'embrayage est actif, l'organe de commande étant en position de déverrouillage, le mécanisme de verrouillage étant toujours en position de verrouillage.
- La figure 6 illustre, selon une vue en perspective éclatée, les différentes pièces constitutives d'un moyen de débrayage conforme à l'invention.
- Les figures 7, 8 et 9 illustrent, selon des vues partielles en perspective, le fonctionnement d'un moyen de débrayage conforme à l'invention, respectivement en position de repos d'embrayage (figure 8) et en position de débrayage (figure 9).

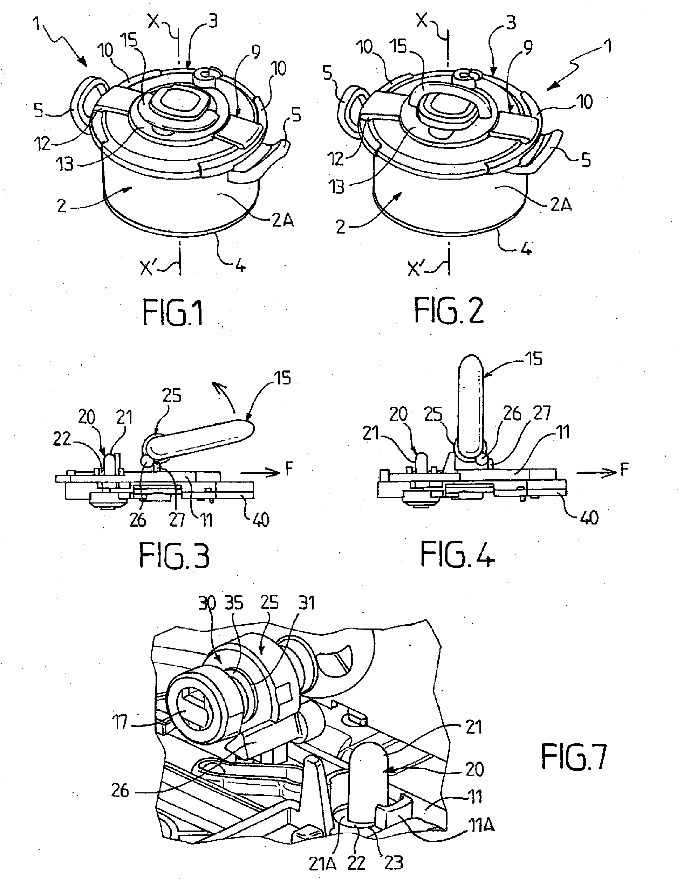

L'appareil 1 de cuisson d'aliments sous pression conforme à l'invention illustré aux figures (en particulier aux figures 1 et 2) est destiné à assurer la cuisson d'aliments de toutes natures, légumes, poissons ou viandes notamment, à un niveau de pression supérieur à la pression atmosphérique au sein d'une enceinte de cuisson sensiblement étanche formée par une cuve 2 et un couvercle 3 rapporté sur ladite cuve.

L'appareil 1 conforme à l'invention est généralement un appareil à usage domestique, tels que des autocuiseurs, étant entendu que l'invention peut néanmoins s'appliquer sans sortir de son cadre, à des appareils de type professionnel ou semi-professionnel.

De manière connue, l'appareil 1 conforme à l'invention est avantageusement conçu pour monter en pression sous l'effet d'une source de chauffe embarquée ou externe et est de manière préférentielle un autocuiseur.

De manière également classique, la cuve 2 forme le récipient de cuisson et présente avantageusement une symétrie de révolution selon un axe XX', cet axe se référant à la direction verticale de l'appareil lorsqu'il est en fonctionnement normal, c'est-à-dire repose sur un plan horizontal. La référence « *axiale* » ainsi définie sera utilisée dans la suite de la description par opposition à la direction radiale, laquelle pourra être une direction radiale interne en direction de l'axe XX' ou radiale externe en éloignement dudit axe.

La cuve 2 est fabriquée à partir d'un matériau métallique tel que de l'acier inoxydable et est pourvue d'un fond 4, bon conducteur de la chaleur solidarisé à la cuve 2 par toutes techniques appropriées bien connues de l'homme du métier, et par exemple par frappe à chaud, les parois 2A de la cuve 2 s'élevant sensiblement verticalement à partir dudit fond 4.

Telle qu'illustrée aux figures 1 et 2, la cuve 2 peut également comporter de manière avantageuse des organes de préhension 5, telles que des poignées, préférentiellement au nombre de deux et fixées par exemple par rivetage, ou tous moyens appropriés, sur les parois de la cuve 2, de préférence en position diamétralement opposée.

Le couvercle 3 de l'appareil 1 conforme à l'invention est de forme conjuguée à celle de la cuve 2 de manière à pouvoir être rapporté sur cette dernière pour fermer la cuve 2 de manière sensiblement étanche pour former l'enceinte de cuisson.

De manière bien connue, le couvercle 3 est pourvu d'un joint annulaire (non représenté aux figures), par exemple en matériau élastomère, destiné à venir en appui contre le rebord supérieur de la cuve 2 de manière à réaliser une fermeture sensiblement étanche afin de permettre la montée en pression de l'appareil.

Tel qu'illustré aux figures 1 et 2, l'appareil 1 de cuisson est avantageusement un autocuiseur dont la cuve 2 est cylindrique et le couvercle 3, de forme générale discoïde, circulaire, étant entendu qu'au sens de l'invention, l'appareil 1 conforme à l'invention peut être de toute autre forme, en particulier ovale.

Tel qu'illustré aux figures, l'appareil 1 de cuisson d'aliments sous pression conforme à l'invention comporte également un mécanisme de verrouillage 9 monté mobile sur le couvercle 3 et destiné à assurer le verrouillage / déverrouillage du couvercle 3 sur la cuve 2.

Comme indiqué dans la partie introductive de la demande de brevet, les mécanismes de verrouillage sont bien connus de l'homme du métier et peuvent être de différents types.

Dans l'exemple illustré aux figures 1 à 9 de l'invention, le mécanisme de verrouillage 9 comprend à titre purement illustratif et non limitatif au moins une, et de préférence deux mâchoires de verrouillage 10 montées radialement mobiles sur le couvercle 3 entre une position de verrouillage (figure 1) et une position de déverrouillage (figure 2).

Tel qu'illustrées, les mâchoires de verrouillage 10 se présentent classiquement sous la forme de segments en arc-de-cercle de section transversale en U de manière à pouvoir venir enserrer, dans leur position de verrouillage, le rebord supérieur de la cuve 2 pour réaliser le verrouillage.

Le mécanisme de verrouillage 9 comprend également des bras entraîneurs (non représentés) reliés par une extrémité à chaque mâchoire 10 et par l'autre extrémité, située vers le centre du couvercle 3, à un verrou 11 de commande monté également en translation sur le couvercle 3, de préférence selon une direction radiale et orthogonale à celle du déplacement des mâchoires 10. Tel qu'illustré, le verrou 11 peut être formé par une plaque qui, avantageusement, repose en appui glissant sur une platine 40 montée en appui sur la face supérieure du couvercle 3. Tel qu'illustré également aux figures 1 et 2, la face supérieure du couvercle 3 peut être pourvue d'un habillage, par exemple à base de matériau plastique, par exemple une traverse 12 et un disque central 13 permettant de recouvrir respectivement les bras entraîneurs ainsi que le verrou 11 et les pièces de la liaison cinématique associées.

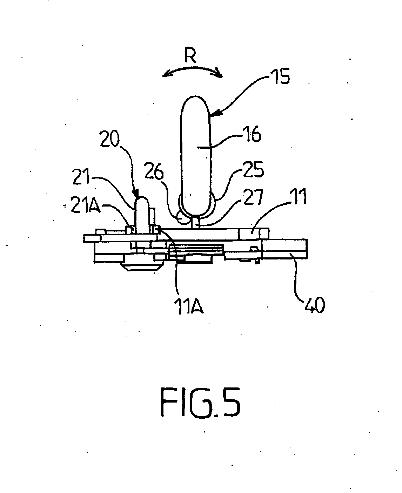

L'appareil 1 de cuisson d'aliments sous pression comprend également un organe de commande 15 du verrouillage / déverrouillage du couvercle 3 sur la cuve 2, ledit organe 15 étant mobile entre au moins une position de déverrouillage (figures 4 et 5) et une position de repos (figures 1 et 3) et étant en liaison cinématique avec le mécanisme de verrouillage 9. Selon cette disposition, l'organe de commande 15 est monté mobile sur le couvercle 3 pour inter agir avec et sur le mécanisme de verrouillage 9 et assurer le verrouillage / déverrouillage du couvercle 3.

Dans l'exemple préférentiel de réalisation illustré aux figures, l'organe de commande 15 est réalisé sous la forme d'un levier monté sensiblement dans la partie centrale du couvercle 3 et à rotation autour d'un axe Y-Y' sensiblement orthogonal à l'axe X-X' de révolution du couvercle 3 et de l'appareil 1. Selon la version préférentielle illustrée aux figures, l'organe de commande 15 est un levier constitué par une arche 16 avec une anse globalement de forme semi-circulaire constituant la partie de préhension laquelle se termine par deux demi-axes 17 servant d'axe de rotation Y-Y' et de liaison avec le couvercle 3.

De cette façon, l'organe de commande 15 est monté à rotation sur le couvercle 3 par l'intermédiaire de l'axe de rotation Y-Y' formé avantageusement de deux demi-axes 17.

L'appareil 1 d'aliments de cuisson sous pression conforme à l'invention comprend également un moyen de sécurité 20 à l'ouverture qui est sensible à la pression existant dans l'enceinte de cuisson et est susceptible d'occuper une position active dans laquelle il empêche le déverrouillage du couvercle 3 lorsqu'il règne dans l'enceinte de cuisson une pression sensiblement supérieure à la pression atmosphérique.

Tel qu'illustré aux figures, en particulier aux figures 3 à 5 et 7, le moyen de sécurité 20 est avantageusement réalisé sous la forme d'un doigt 21 monté libre en translation au sein d'un orifice 22 ménagé dans l'épaisseur du couvercle 3, le verrou 11 possédant également une lumière 23 et étant disposé sur le couvercle 3 pour que la lumière 23 soit alignée avec l'orifice 22. La lumière 23 a des dimensions suffisamment grandes et appropriées pour que le verrou11 puisse se translater librement lorsque le doigt est en position basse (Fig.3, 4 et 7) tout en pénétrant et dépassant hors de la lumière 23. Dans la position haute du doigt 21, monté mobile au sein de l'orifice 22, illustrée à la figure 5 et correspondant à l'existence d'une pression dans l'enceinte de cuisson, le pied 21 A du doigt qui possède des dimensions supérieures au reste du doigt 21 correspondant à celles de la lumière 23, vient engager des ergots 11A solidaires de la platine 40 et le flancs de la lumière 23 pour assurer le blocage du verrou 11. Selon ce montage, le doigt 21 est libre de se déplacer vers sa position basse lorsque la pression régnant à l'intérieur de l'enceinte de cuisson est sensiblement égale à la pression atmosphérique régnant à l'extérieur de l'enceinte de cuisson ou vers sa position haute lorsque la pression interne est supérieure à la pression atmosphérique.

Tel qu'illustré aux figures, le déplacement du mécanisme de verrouillage 9, en particulier des mâchoires 10 s'effectue par l'intermédiaire de l'organe de commande 15 dont le déplacement, en l'occurrence et de manière préférentielle la rotation, de sa position de verrouillage illustrée à la figure 1 vers sa position de déverrouillage illustrée à la figure 4, et assure *in fine* le déplacement du verrou 11. Ce dernier assure, par le biais de la chaîne cinématique le reliant aux bras entraîneurs solidaires des mâchoires 10, le déplacement desdites mâchoires 10 en direction radiale externe pour venir occuper leur position de déverrouillage illustrée à la figure 2.

Dans l'exemple préférentiel illustré aux figures, l'organe de commande 15 occupe une position sensiblement horizontale (figure 1) ou rabattue contre le couvercle 3 en position de verrouillage et une position sensiblement verticale (figure 4) ou déployée dans sa position de déverrouillage.

La liaison cinématique permettant d'assurer le déplacement du verrou 11 et des mâchoires de verrouillage 10 est réalisée par l'intermédiaire d'une came d'entraînement 25 asservie au déplacement de l'organe de commande 15 et préférentiellement réalisée par une bague montée sur un demi-axe 17 et pourvue extérieurement d'un pion d'engagement 26 destiné à venir en appui contre un plot 27 solidaire de la face supérieure du verrou 11 et s'étendant sensiblement verticalement de manière à pouvoir être engagé par le pion 26 lors de la mise en rotation de l'arche 16 ou de l'organe de commande 15.

On comprend ainsi, qu'avec le montage cinématique proposé, la position haute du doigt 21 bloque le déplacement en rotation du verrou 11 en cas de tentative de mise en action de l'organe de commande 15 pour passer de la position de verrouillage à sa position de déverrouillage.

L'appareil 1 de cuisson d'aliments sous pression comprend également un organe de commande 15 qui est pourvu d'un ou associé à un moyen de débrayage 30 autorisant l'organe de commande 15 à venir occuper sa position de déverrouillage sans toutefois permettre le déverrouillage.

Ainsi, selon des caractéristiques importantes de l'invention, le moyen de débrayage 30 est agencé pour désaccoupler la liaison cinématique entre l'organe de commande 15 et le mécanisme de verrouillage 9 lorsque l'organe de commande 15 occupe sa position de déverrouillage et que le moyen de sécurité 20 est dans sa position active de telle sorte que l'organe de commande 15 est libre de se déplacer entre sa position de verrouillage et sa position de repos.

Ainsi, selon ce montage, le fait de réaliser un désaccouplement de l'organe de commande 15 avec le mécanisme de verrouillage 9 permet à l'organe de commande 15 d'être totalement libre dans son déplacement, et en particulier dans sa rotation autour de l'axe Y-Y', l'organe de commande 15 étant ainsi soumis à son seul poids et aux seules forces de frottement résultant de son montage autour de l'axe Y-Y'. Le moyen de débrayage 30 est donc agencé pour interrompre la liaison ou chaîne cinématique existant entre l'organe de commande 15 et le mécanisme de verrouillage 9.

Le moyen de débrayage 30 est donc agencé, c'est-à-dire conçu et apte à rompre la liaison cinématique et à mettre en situation de débrayage l'organe de commande 15 lorsqu'il est déplacé de sa position de repos vers et jusqu'à sa position de déverrouillage tandis que le moyen de sécurité 20 occupe sa position active. Dans cette situation particulière, correspondant à la présence d'une pression résiduelle supérieure à la pression atmosphérique au sein de l'enceinte de cuisson, l'utilisateur bien qu'il ait pu déplacer l'organe de commande 15 jusqu'à sa position de déverrouillage (illustrée à la figure 5 par exemple) ne peut déverrouiller le couvercle 3, l'organe de commande 15 étant en réalité mobile mais inactif ou inactivé. En revanche, l'organe de commande 15 qui est débrayé, est entièrement libre dans son déplacement, et en particulier dans sa rotation autour de l'axe Y-Y' puisqu'il n'est soumis qu'à son seul poids et aux éventuelles forces de frottement.

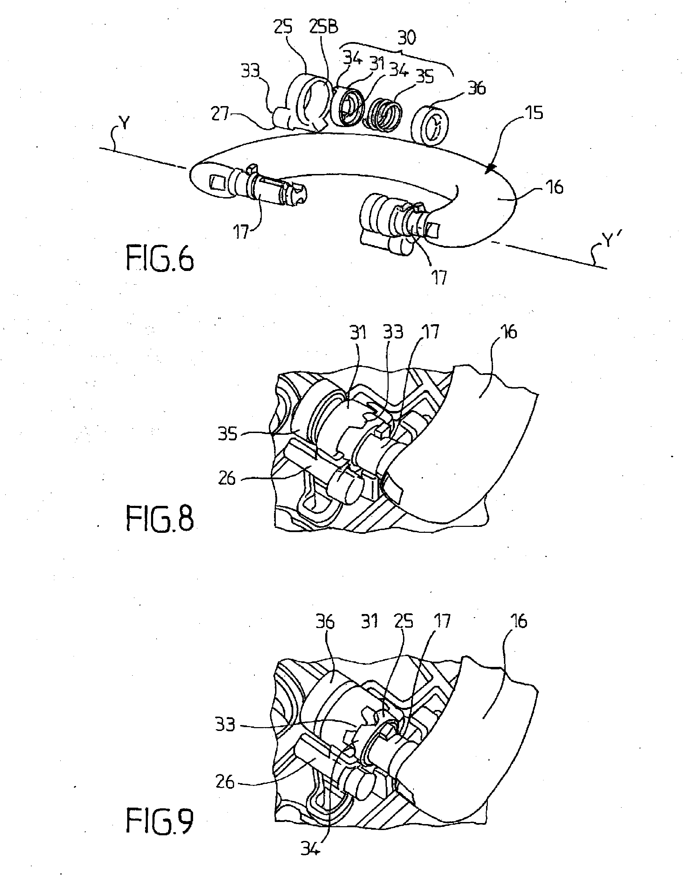

Tel qu'illustré en particulier aux figures 6 à 9, le moyen de débrayage 30 comporte avantageusement un disque de débrayage 31 monté sur l'axe de rotation Y-Y' de l'organe de commande 15, et avantageusement dans la variante préférentielle illustrée à la figure 6 sur l'un des demi-axes 17.

Plus particulièrement, l'organe de commande 15 est pourvu de ou associé à la came d'entraînement 25 elle-même montée sur l'axe de rotation Y-Y' et apte à engager le mécanisme de verrouillage 9 pour assurer son déplacement lors de sa mise en rotation, ladite came d'entraînement 25 étant accouplée au disque d'embrayage 31 lequel est monté à translation sur l'axe de rotation Y-Y'.

Grâce à ce montage, il est ainsi possible d'obtenir une situation de débrayage des pièces correspondant à un désaccouplement si l'effort subit par les deux pièces accouplées est trop important, le disque d'embrayage 31 étant alors susceptible de se translater sur l'axe de rotation Y-Y'.

Selon l'invention et de manière particulièrement avantageuse, la came d'entraînement 25 est accouplée au disque d'embrayage 31 par l'intermédiaire de dents d'entraînement 33, 34, le disque d'embrayage 31 étant maintenu en position d'accouplement souple contre la came d'entraînement 9.

Avantageusement, le disque d'embrayage 31 est maintenu en position d'accouplement souple par le biais d'un ressort de compression 35 monté sur l'axe de rotation Y-Y', en l'occurrence le demi-axe 17 et en appui sur ou contre le disque d'embrayage 31.

Tel qu'illustré, le ressort de compression 35 peut être un ressort hélicoïdal enfilé sur le demi-axe 17 et contraint en appui souple par une rondelle de blocage 36 qui maintient l'ensemble du moyen de débrayage 30 en accouplement souple avec la came d'entraînement 25.

Telle qu'illustrée aux figures, la came d'entraînement 25 est avantageusement réalisée sous la forme d'une pièce annulaire enfilée sur le demi-axe 17 et formant un logement interne 25B au sein duquel les dents d'entraînement 33 sont ménagées. Le disque d'embrayage 31 est lui aussi de forme annulaire et de dimension appropriée pour venir s'insérer au sein du logement 25B, ledit disque d'embrayage 31 comportant sur sa face d'engagement une série de dents d'entraînement 34 complémentaire aux dents d'entraînement 33 de façon à réaliser un accouplement entre les dents 33 et 34.

Ainsi, le moyen de débrayage 30 monté sur l'axe Y-Y' met en oeuvre une came d'entraînement 25 montée en pivot avec l'organe de commande 15, en l'occurrence l'arche 16 et un disque de débrayage 31 montée en liaison glissière avec l'organe de commande 15. Avantageusement, l'accouplement entre le disque d'embrayage 31 et la came d'entraînement 25 est assurée par un couple de deux dents d'entraînement 33, 34 situé respectivement sur la came d'entraînement 25 et sur le disque d'embrayage 31, étant entendu qu'au sens de l'invention l'accouplement peut être réalisé avec une dent unique ou au contraire avec une nombre de dents supérieur à deux, et par exemple trois ou quatre dents.

Le fonctionnement du dispositif est le suivant.

Lorsqu'à l'issue d'un cycle de cuisson, le moyen de sécurité 20 est dans sa position basse, c'est-à-dire inactive, tel qu'illustré aux figures 3 et 4, correspondant à l'existence d'une pression à l'intérieur de l'enceinte sensiblement égale à la pression atmosphérique, l'utilisateur peut déverrouiller l'appareil 1 conforme à l'invention. Pour cela, il saisit l'organe de commande 15, en l'occurrence l'arche 16 et l'amène de sa position sensiblement horizontale illustrée à la figure 1 à la position de déverrouillage illustrée à la figure 4 dans laquelle l'organe de commande 15 est dans sa position sensiblement verticale après être passé par différentes positions intermédiaires dont celle illustrée à la figure 3.

Au cours de la rotation de l'organe de commande 15 autour de l'axe Y-Y', la came d'actionnement 25 qui est solidaire de l'organe de commande 15 est également mise en rotation et vient déplacer par son pion 26 le plot 27 solidaire du verrou 11, lequel peut alors se translater selon la direction F (figure 4) puisque le moyen de sécurité 20 est dans sa position inactive. La translation du verrou 11 provoque corrélativement le déplacement des mâchoires 10 en direction radiale externe pour atteindre leur position de déverrouillage (figure 2) dans laquelle l'organe de commande 15 occupe sa position verticale.

En revanche, dans l'hypothèse ou à l'issue d'un cycle de cuisson, il subsiste encore une pression résiduelle interne à l'enceinte de cuisson qui est supérieure à la pression atmosphérique de telle sorte que le moyen de sécurité 20 occupe sa position haute correspondant à sa position active telle qu'illustrée par exemple à la figure 5 dans laquelle le verrou 11 est par conséquent bloqué en translation, l'utilisateur ne peut déverrouiller l'appareil 1 conforme à l'invention même s'il « *force* » sur le mécanisme en amenant l'organe de commande 15 dans sa position verticale de déverrouillage.

En effet, en voulant faire passer l'organe de commande 15 de sa position horizontale illustrée à la figure 1 vers sa position verticale illustrée à la figure 5 alors que le moyen de sécurité 20 est dans sa position active, c'est-à-dire qu'il empêche le verrou 11 de se translater selon la direction F, l'utilisateur rencontre un effort résistant puisque la came d'entraînement 25 ne peut être mise en rotation. Si l'utilisateur persiste à vouloir mettre l'organe de commande 15 dans sa position de déverrouillage sensiblement verticale, le disque de débrayage 31 entraîné par l'organe de commande 15, en l'occurrence l'arche 16, et en appui sur les dents 33 de la came d'entraînement 25, recule sur l'axe Y-Y' en comprimant le ressort 35 (figure 8 et 9). Lorsque le disque de débrayage 31 est désaccouplé de la came 25, le verrou 11 ne peut plus être entraîné et se translater selon la flèche F (figure 5) de telle sorte qu'il n'y a plus aucun effort exercé sur le mécanisme à l'exception des forces de frottement si l'arche 16 est malgré tout mise en rotation. Dans tous les cas, l'organe de commande 15, en l'occurrence l'arche 16 est totalement libre à rotation sur son axe Y-Y'.

A titre de variante préférentielle, et tel qu'illustré à la figure 6 en particulier, lorsque l'organe de commande 15 est formé par une arche 16 montée sur le couvercle en rotation par deux demi-axes 17, chaque demi-axe 17 est pourvu d'une came d'entraînement 25 et d'un mécanisme de débrayage 30 pour des raisons d'équilibre cinématique. Néanmoins, à titre de variante, il est bien évidemment envisageable d'équiper l'arche 16 d'un seul mécanisme de débrayage 30 et d'une seule came d'entraînement 25 à titre de variante complémentaire.

En définitive, l'invention procure une grande facilité de manipulation à l'utilisateur puisque le mécanisme de débrayage se met en action de manière automatique ce qui en outre procure une grande sécurité d'utilisation et ne nécessite aucun effort de la part de l'utilisateur.

L'ensemble des pièces du mécanisme est par ailleurs peu sollicité puisque les efforts sont réduits de telle sorte que l'ensemble des mécanismes bénéficie d'une bonne longévité d'utilisation sans détérioration de leur qualité.

## Revendications

1. Appareil (1) de cuisson d'aliments sous pression comprenant :
- une cuve (2) et un couvercle (3) susceptible de fermer la cuve (2) de manière étanche pour former une enceinte de cuisson,
- un organe de commande (15) du verrouillage/déverrouillage du couvercle (3) sur la cuve (2), ledit organe (15) étant mobile entre au moins une position de déverrouillage et une position de repos, et étant en liaison cinématique avec un mécanisme de verrouillage (9) monté mobile sur le couvercle (3) pour le déplacer et assurer le verrouillage/déverrouillage du couvercle (3),
- un moyen de sécurité (20) à l'ouverture sensible à la pression existant dans l'enceinte de cuisson et susceptible d'occuper une position active dans laquelle il empêche le déverrouillage du couvercle (3) lorsqu'il règne dans l'enceinte de cuisson une pression sensiblement supérieure à la pression atmosphérique,
- ledit organe de commande étant pourvu d'au moins un moyen de débrayage (30) autorisant l'organe de commande (15) à venir occuper sa position de déverrouillage sans permettre le déverrouillage, ledit appareil (1) étant **caractérisé en ce que** ledit au moins un moyen de débrayage (30) est agencé pour désaccoupler la liaison cinématique entre l'organe de commande (15) et le mécanisme de verrouillage (9) lorsque l'organe de commande (15) occupe sa position de déverrouillage et que le moyen de sécurité (20) est dans sa position active de telle sorte que l'organe de commande (15) est libre de se déplacer entre sa position de verrouillage et de repos.

2. Appareil (1) selon la revendication 1 **caractérisé en ce que** l'organe de commande (15) est monté à rotation sur le couvercle (3) par l'intermédiaire d'un axe de rotation.

3. Appareil (1) selon la revendication 2 **caractérisé en ce que** le moyen de débrayage (30) comporte un disque de débrayage (31) monté sur l'axe de rotation de l'organe de commande (15).

4. Appareil (1) selon la revendication 3 **caractérisé en ce que** l'organe de commande (15) est pourvu d'une came d'entraînement (25) montée sur l'axe de rotation et apte à engager le mécanisme de verrouillage (9) pour assurer son déplacement lors de sa mise en rotation, ladite came d'entraînement (25) étant accouplée au disque d'embrayage (31) lequel est monté à translation sur l'axe de rotation.

5. Appareil (1) selon la revendication 4 **caractérisé en ce que** la came d'entraînement (25) est accouplée au disque d'embrayage (31) par l'intermédiaire de dents d'entraînement (33, 34), le disque d'embrayage (31) étant maintenu en position d'accouplement souple contre la came d'entraînement (25).

6. Appareil (1) selon la revendication 5 **caractérisé en ce que** le disque d'embrayage (31) est maintenu en position d'accouplement souple par le biais d'un ressort de compression (35) monté sur l'axe de rotation en appui sur le disque d'embrayage (31).

7. Appareil (1) selon l'une des revendications précédentes **caractérisé en ce que** l'organe de commande (15) est un levier.

8. Appareil (1) selon la revendication 7 **caractérisé en ce que** le levier est formé par une arche (16).

9. Appareil (1) selon la revendication 8 **caractérisé en ce que** l'arche (16) est montée à rotation sur le couvercle (3) par deux demi-axes de rotation (17), chaque demi-axe (17) étant pourvu d'un moyen de débrayage (30).

10. Appareil (1) selon l'une des revendications précédentes **caractérisé en ce que** le mécanisme de verrouillage (9) comprend un verrou (11) monté en translation sur le couvercle (3), ledit verrou comportant un plot (27) destiné à être engagé par la came d'entraînement (25) lors du déplacement de l'organe de commande (15) entre sa position de verrouillage et de repos de telle sorte que le verrou (11) peut être déplacé par l'organe de commande (15) sur une course de déplacement, ledit verrou (11) étant en liaison cinématique avec au moins une pièce de verrouillage, du genre segment ou mâchoire (10), venant verrouiller le couvercle (3) sur la cuve (2).

11. Appareil (1) selon la revendication 9 **caractérisé en ce que** le moyen de sécurité (20) à l'ouverture est un doigt (21) de sécurité monté mobile sur le couvercle (3) de sorte à venir bloquer la translation du verrou (11) lorsqu'il occupe sa position active.

## Patentansprüche

1. Druckkochgerät (1) für Nahrungsmittel, umfassend:
- einen Behälter (2) und einen Deckel (3), der den Behälter (2) dicht verschließen kann, um einen Kochraum zu bilden,
- ein Steuerelement (15) zur Verriegelung/Entriegelung des Deckels (3) auf dem Behälter (2), wobei das Element (15) zwischen mindestens einer Entriegelungsposition und einer Ruheposition beweglich montiert und mit einem Verriegelungsmechanismus (9), der beweglich auf dem Deckel (3) montiert ist, um ihn zu verschieben und die Verriegelung/Entriegelung des Deckels (3) zu gewährleisten, in kinematischer Verbindung steht,
- ein Sicherungsmittel (20) beim Öffnen, das für den Druck, der in dem Kochraum vorhanden ist, empfindlich und geeignet ist, eine aktive Position einzunehmen, in der es die Entriegelung des Deckels (3) verhindert, wenn in dem Kochraum ein wesentlich höherer Druck als der Atmosphärendruck vorhanden ist,
- wobei das Steuerelement mit mindestens einem Entkuppelungsmittel (30) versehen ist, das es dem Steuerelement (15) gestattet, seine Entriegelungsposition einzunehmen, ohne die Entriegelung zu ermöglichen, wobei das Gerät (1) **dadurch gekennzeichnet ist, dass** das mindestens eine Entkuppelungsmittel (30) derart angeordnet ist, dass es die kinematische Verbindung zwischen dem Steuerelement (15) und dem Verriegelungsmechanismus (9) entkoppelt, wenn das Steuerelement (15) seine Entriegelungsposition einnimmt, und dass das Sicherungsmittel (20) in seiner aktiven Position ist, so dass sich das Steuerelement (15) frei zwischen seiner Verriegelungsposition und seiner Ruheposition bewegen kann.

2. Gerät (1) nach Anspruch 1, **dadurch gekennzeichnet, dass** das Steuerelement (15) drehbar auf dem Deckel (3) mit Hilfe einer Drehachse montiert ist.

3. Gerät (1) nach Anspruch 2, **dadurch gekennzeichnet, dass** das Entkuppelungsmittel (30) eine Kupplungsscheibe (31) umfasst, die auf der Drehachse des Steuerelements (15) montiert ist.

4. Gerät (1) nach Anspruch 3, **dadurch gekennzeichnet, dass** das Steuerelement (15) mit einer Antriebsnocke (25) versehen ist, die auf der Drehachse montiert und geeignet ist, in den Verriegelungsmechanismus (9) einzugreifen, um seine Bewegung, wenn er in Drehung versetzt wird, zu gewährleisten, wobei die Antriebsnocke (25) mit der Kupplungsscheibe (31), die in Translation auf der Drehachse montiert ist, gekoppelt ist.

5. Gerät (1) nach Anspruch 4, **dadurch gekennzeichnet, dass** die Antriebsnocke (25) mit der Kupplungsscheibe (31) durch Antriebszähne (33, 34) verbunden ist, wobei die Kupplungsscheibe (31) an der Antriebsnocke (25) in flexibler Kupplungsposition gehalten wird.

6. Gerät (1) nach Anspruch 5, **dadurch gekennzeichnet, dass** die Kupplungsscheibe (31) über eine Kompressionsfeder (35), die auf der Drehachse auf der Kupplungsscheibe (31) anliegend montiert ist, in flexibler Kupplungsposition gehalten wird.

7. Gerät (1) nach einem der vorhergehenden Ansprüche, **dadurch gekennzeichnet, dass** das Steuerelement (15) ein Hebel ist.

8. Gerät (1) nach Anspruch 7, **dadurch gekennzeichnet, dass** der Hebel von einem Bogen (16) gebildet ist.

9. Gerät (1) nach Anspruch 8, **dadurch gekennzeichnet, dass** der Bogen (16) drehbar auf dem Deckel (3) durch zwei Halbdrehachsen (17) montiert ist, wobei jede Halbachse (17) mit einem Entkuppelungsmittel (30) versehen ist.

10. Gerät (1) nach einem der vorhergehenden Ansprüche, **dadurch gekennzeichnet, dass** der Verriegelungsmechanismus (9) einen Riegel (11) umfasst, der in Translation auf dem Deckel (3) montiert ist, wobei der Riegel ein Stück (27) umfasst, in das die Antriebsnocke (25) bei der Bewegung des Steuerelements (15) zwischen seiner Verriegelungsposition und seiner Ruheposition eingreifen soll, so dass der Riegel (11) von dem Steuerelement (15) auf einer Bewegungsstrecke bewegt werden kann, wobei der Riegel (11) mit mindestens einem Verriegelungsstück vom Typ Segment oder Klemmbacke (10) in kinematischer Verbindung ist, das den Deckel (3) auf dem Behälter (2) verriegelt.

11. Gerät (1) nach Anspruch 9, **dadurch gekennzeichnet, dass** das Sicherungsmittel (20) beim Öffnen ein Sicherungsfinger (21) ist, der beweglich auf dem Deckel (3) montiert ist, um die Translation des Riegels (11), wenn er seine aktive Position einnimmt, zu blockieren.

## Claims

1. An appliance (1) for cooking food under pressure, the appliance comprising:
- a vessel (2) and a lid (3) suitable for closing the vessel (2) in leaktight manner in order to form a cooking enclosure;
- a control member (15) for locking/unlocking the lid (3) on the vessel (2), said member (15) being movable between at least an unlocking position and a rest position, and being drivingly connected with a locking mechanism (9) movably mounted on the lid (3) to move the mechanism and lock/unlock the lid (3);
- opening safety means (20) sensitive to the pressure that exists inside the cooking enclosure and suitable for occupying an active position in which they prevent unlocking of the lid (3) when there exists a pressure inside the cooking enclosure that is significantly greater than atmospheric pressure; and
- declutching means (30) associated with said control member to allow the control member (15) to move into its unlocking position without enabling unlocking; said appliance (1) being **characterized in that** said declutching means (30) are arranged to decouple the driving connection between the control member (15) and the locking mechanism (9) when the control member (15) occupies its unlocking position and the safety means (20) are in their active position such that the control member (15) is free to move between its locking position and its rest position.

2. An appliance (1) according to claim 1, **characterized in that** the control member (15) is pivotally mounted on the lid (3) about a pivot axis.

3. An appliance (1) according to claim 2, **characterized in that** the declutching means (30) comprise a declutching disk (31) mounted on the pivot axis of the control member (15).

4. An appliance (1) according to claim 3, **characterized in that** the control member (15) is provided with a drive cam (25) mounted on the pivot axis and suitable for engaging the locking mechanism (9) in order to move it on being pivoted, said drive cam (25) being coupled to the clutch disk (31) which is mounted to move in translation along the pivot axis.

5. An appliance (1) according to claim 4, **characterized in that** the drive cam (25) is coupled to the clutch disk (31) via drive teeth (33, 34), the clutch disk (31) being held in a flexible coupling position against the drive cam (25).

6. An appliance (1) according to claim 5, **characterized in that** the clutch disk (31) is held in a flexible coupling position by a compression spring (35) mounted on the pivot axis to bear against the clutch disk (31).

7. An appliance (1) according to any preceding claim, **characterized in that** the control member (15) is a lever.

8. An appliance (1) according to claim 7, **characterized in that** the lever is formed by an arch (16).

9. An appliance (1) according to claim 8, **characterized in that** the arch (16) is pivotally mounted on the lid (3) by two pivot half-shafts (17), each half-shaft (17) being provided with respective declutching means (30).

10. An appliance (1) according to any preceding claim, **characterized in that** the locking mechanism (9) comprises a latch (11) mounted to move in translation on the lid (3), said latch having a stud (27) designed to be engaged by the drive cam (25) during the movement of the control member (15) between its locking and rest positions, such that the latch (11) can be moved by the control member (15) over a travel stroke, said latch (11) being in driving connection with at least one locking part, such as a segment or a jaw (10), that serves to lock the lid (3) on the vessel (2).

11. An appliance (1) according to claim 9, **characterized in that** the opening safety means (20) comprise a safety finger (21) movably mounted on the lid (3) so as to block movement in translation of the latch (11) when occupying its active position.
